(19) Europäisches Patentamt
European Patent Office
Office européen des brevets

(11) EP 0 668 889 B1

(12) EUROPÄISCHE PATENTSCHRIFT

(45) Veröffentlichungstag und Bekanntmachung des Hinweises auf die Patenterteilung:
**12.03.1997 Patentblatt 1997/11**

(21) Anmeldenummer: **94900109.3**

(22) Anmeldetag: **08.11.1993**

(51) Int Cl.[6]: **C08K 13/02**, C08L 57/08
// (C08K13/02, 3:22, 5:09, 5:09)

(86) Internationale Anmeldenummer:
**PCT/EP93/03114**

(87) Internationale Veröffentlichungsnummer:
**WO 94/11431 (26.05.1994 Gazette 1994/12)**

# (54) STABILISATORMISCHUNGEN FÜR POLYMERISATE MIT GRANATEN

STABILIZER MIXTURES CONTAINING GARNET-CLASS COMPOUNDS FOR POLYMERS

MELANGES DE STABILISANTS POUR POLYMERISATS CONTENANT DES GRENATS

(84) Benannte Vertragsstaaten:
**AT BE CH DE ES FR GB IT LI NL SE**

(30) Priorität: **16.11.1992 DE 4238567**

(43) Veröffentlichungstag der Anmeldung:
**30.08.1995 Patentblatt 1995/35**

(73) Patentinhaber: **Henkel Kommanditgesellschaft auf Aktien**
**40191 Düsseldorf (DE)**

(72) Erfinder:
- **KUHM, Peter**
  **D-40724 Hilden (DE)**
- **LÖFFELHOLZ, Frido**
  **D-27574 Bremerhaven (DE)**
- **WEDL, Peter**
  **D-27568 Bremerhaven (DE)**
- **WEGEMUND, Bernd**
  **D-42781 Haan (DE)**

(56) Entgegenhaltungen:
**EP-A- 0 508 857** **GB-A- 2 213 154**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 668 889 B1

**Beschreibung**

Die Erfindung liegt auf dem allgemeinen Gebiet der Stabilisatoren für Polymerisate auf Basis von halogenhaltigen Vinylmonomeren und betrifft Stabilisatormischungen, die neben Calcium- und Zinkseifen zusätzlich Granate enthalten, die gegebenenfalls oberflächenmodifiziert sein können.

Halogenhaltige Kunststoffe oder auch die daraus hergestellten Formmassen neigen bekanntermaßen unter der Einwirkung von Hitze und UV-Licht zur Abspaltung von Chlorwasserstoff, was die Zersetzung und Verfärbung des halogenhaltigen Kunststoffes bzw. der Formmasse bedingt. Um dem entgegenzuwirken, werden bis heute die traditionellen Schwermetallverbindungen auf Basis von Blei, Barium und/oder Cadmium eingesetzt. Aus arbeitsphysiologischer und ökologischer Sicht besteht jedoch ein Bedürfnis, diese durchaus wirkungsvollen Stabilisatoren durch undenklichere Verbindungen zu ersetzen. In dieser Richtung haben sich in den letzten Jahren Stabilisatormischungen mit Calcium- und Zinkseifen etabliert, die aber stets zusätzliche Co-Stabilisatoren benötigen, um ein annehmbares Leistungsvermögen zu zeigen. Die Co-Stabilisatoren können sowohl anorganischer als auch organischer Natur sein. Als anorganische Co-Stabilisatoren werden in der deutschen Patentschrift DE-C-30 19 632 Hydrotalcite mit kleinen BET-Oberflächen vorgeschlagen. Hydrotalcite sind Schichtverbindungen, die in der Regel Schichten aus magnesiumhaltigen Hydroxyaluminaten mit statistischer Verteilung von Magnesium- und Aluminium-Ionen aufweisen, wobei oft die Hydroxylgruppen partiell durch Carbonatgruppen ausgetauscht sind. Um die Kompabilität dieser Hydrotalcite in den halogenhaltigen Kunststoffen zu verbessern, wird in der europäischen Offenlegungsschrift empfohlen, die Hydrotalcite mit Fettsäureester, anionischen Tensiden oder Kupplungsmittel oberflächlich zu modifizieren. Hydrotalcite sind zwar wirksame Stabilisatoren, aber nur aufwendig herstellbar und dementsprechend teuer.

Aus der deutschen Patentschrift DE-C-39 41 902 ist es bekannt, basische Calcium-Aluminium-Hydroxy-Phosphite als Stabilisator für PVC zu verwenden. Die dort beschriebenen Calciumaluminate scheinen ebenfalls wie die Hydrotalcite Schichtverbindungen zu sein. Außer diesen beiden Typen der Schichtverbindungen sind noch Calciumsilikate, -titanate und -aluminate aus der deutschen Patentschrift DE-C-27 16 389 und der deutschen Auslegeschrift DE-B-25 53 409 als Stabilisatorbestandteil für PVC bekannt. Diese Verbindungen sind jedoch häufig nur unzureichend in PVC dispergierbar und zeigen auch nur wenig stabilisierende Wirkung.

Aufgabe der vorliegenden Erfindung war es, einen Stabilisatoren für Polymere auf Basis halogenhaltiger Vinylmonomerer bereitzustellen, die in einfacher Weise herstellbar sind und leicht in dem Kunststoff dispergiert werden können. Außerdem sollten die Stabilisatoren die stabilisierende Wirkung von Calcium- und Zinkseifen verstärken, damit der Kunststoff bei thermischer und/oder UV-Belastung möglichst lange eine gute helle Anfangsfarbe behält und erst spät zu dunklen Verfärbungen neigt, die die Stabilitätsabbrüche der Stabilisatormischung anzeigen.

Überraschenderweise konnte die Aufgabe gelöst werden, wenn man bestimmte Granate der Formel (I) neben Calcium- und Zinkseifen einsetzt. Gegenstand der vorliegenden Erfindung sind dementsprechend Stabilisatormischungen für Polymerisate auf Basis von halogenhaltigen Vinylmonomeren enthaltend

a) Calciumseifen von $C_{8-32}$ Fettsäuren
b) Zinkseifen von $C_{8-32}$ Fettsäuren
c) Granate, gegebenenfalls oberflächenmodifiziert, der Formel (I)

$$\left[ M^{I}_{x} \; M^{II}_{3-\frac{x}{2}} \; M^{III}_{2-y} \; M^{IV}_{y} \right] (OH)_{z-y} O_{y} \; (A^{n})_{m} \qquad (I)$$

in der

$M^{I}$ für mindestens ein Alkalimetall-Ion
$M^{II}$ für mindestens ein zweiwertiges Metall-Ion
$M^{III}$ für mindestens ein dreiwertiges Metall-Ion
$M^{IV}$ für Titan und/oder Zirkonium-Ionen
$A^{n}$ für mindestens ein n-wertiges Säureanion der Ladung n=1, 2, 3 oder 4 stehen und

die Bedingungen gelten

$0 \leq x < 1$, $0 \leq y < 1$, $0 \leq z < 12$, $0 < m$, wobei $y < z$ und $n \cdot m + z = 12$.

Granate der Formel (I) sind gekennzeichnet durch ein ganz bestimmtes Kristallgitter, wodurch sie sich von anderen Erdalkalialuminaten wie den Hydrotalciten unterscheiden. Dieses Kristallgitter hat einen raumerfüllenden 3-dimensionalen Aufbau, der sich vom Grundtyp des Katoits der Formel $Ca_3Al_2(OH)_{12}$ ableitet. Das Kristallgitter samt Gitterabständen des Grundtyps Katoit ist beispielswesie ausführlich in der Veröffentlichung von C.Cohen-Addad et P.Ducros in Acta Cryst. 23 (1967), Seiten 220 bis 225 beschrieben. Danach ist im Grundtyp das Aluminium-Ion oktaedrisch von 6 Sauerstoff-Ionen, die noch je einen Wasserstoff tragen, umgeben. Das Calcium-Ion ist von 8 Sauerstoff-Ionen umgeben, die einen gestörten Kubus bilden, der auch als dreiflächiger Dodekaeder bezeichnet wird. Bei den erfindungsgemäßen Granaten ist es möglich, das Calcium-Ion ganz oder partiell durch andere zweiwertige Metall-Ionen $M^{II}$ mit vergleichbaren Ionenradien auszutauschen oder auch einen Anteil der zweiwertigen Metall-Ionen durch einwertige Alkalimetall-Ionen $M^I$ der Formel (I) zu ersetzen, sofern der 3-dimensionale Aufbau erhalten bleibt. Unter der gleichen Bedingung kann das Aluminium-Ion ganz oder teilweise in der Katoit-Struktur durch andere dreiwertige Metall-Ionen $M^{III}$, die vergleichbare Ionenradien wie das Aluminium-Ion besitzen, ersetzt werden, wobei es sogar möglich ist, einen Teil der dreiwertigen Metall-Ionen durch die vierwertigen Ionen von Titan oder Zirkonium zu ersetzen. Prinzipiell gilt, daß ein Ersatz der Calcium-Ionen oder Aluminium-Ionen durch andere Ionen desto problemloser möglich ist, desto ähnlicher die Ionenradien der auszutauschenden Ionen sind. Die Ionenradien können in den bekannten Tabellenwerken nachgeschlagen werden. Ebenso ist es möglich, die Hydroxylgruppen der Katoit-Struktur durch andere n-wertige Anionen auszutauschen, wobei es jedoch bevorzugt ist, nur solche Anionen zu wählen, die einen vergleichbaren Ionenradius wie die Hydroxylgruppen aufweisen. Geeignete n-wertige Anionen sind Carbonat, Sulfat, Sulfit, Formiat, Nitrat, Nitrit, Phosphit, Hydrogenphosphit, Fluorid, Chlorid, Borat, Silicat, Stannat, Chlorat und Perchlorat. Ein Teil dieser Granate sind natürliche Mineralien wie der Hydrogrossular der idealisierten Formel $Ca_3Al_2Si_2O_8(SiO_4)_{1-m}(OH)_{4m}$ oder Henritermierte der idealisierten Formel $Ca_3(Mn,Al)_2(SiO_4)_2(OH)_4$. Diese und weitere natürliche Granate mit samt ihren raumerfüllenden Kristallstrukturen werden in " Rock forming Minerals Orthosilicates" Vol 1A, Unterkapitel "Garnet Group", 2.Edition, Hrsg. Deer, Howie and Zussman, Verlag Langman, London and New York 1982 auf den Seiten 468 bis 474 und 649 bis 657 beschrieben. Ein Teil der unter die Formel (I) fallenden Granate sind bereits auf synthetischem Wege hergestellt worden, vergleiche hierzu die Veröffentlichungen von E. Passaglia et. al. "The crystal structur of katoite and implications within the hydrogrossular group of minerals" in Bull. Mineral. 108(1985), Seiten 1 bis 8 und "Katoite, a new member of the $Ca_3Al_2(SiO_4)_3$-$Ca_3Al_2(OH)_{12}$ series and a new nomenclature for the hydrogrossular group of minerals" in Bull. Mineral. 107(1984), Seiten 605 bis 618, wobei in den Veröffentlichungen weitere Dokumente zitiert werden.

Im Sinne der Erfindung werden nun solche Granate der Formel (I) besonders bevorzugt, in denen $M^I$ für ein Natrium-Ion steht. Der Einbau des Natrium-Ions in das raumerfüllende Kristallgitter der Granate kann durch die energiedispersive Röntgenmikroanalyse von entsprechenden Granatkristallen (EDX) belegt werden, da bei der Untersuchung der Kristalle die für das Natrium-Ion typische K-alpha-Linie bei 1,04 KeV auftritt. Die Menge an eingebautem Natrium ist ebenfalls über EDX zu ermitteln.

Des weiteren werden im Sinne der Erfindung besonders solche Granate der Formel (I) bevorzugt, in denen $M^{II}$ für zweiwertige Metall-Ionen ausgewählt aus der Gruppe Calcium, Magnesium, Eisen, Zink und Mangan steht. Diese zweiwertigen Metall-Ionen können alleine oder auch in beliebiger Abmischung im Granat enthalten sein. Besonders bevorzugt steht in der Formel (I) $M^{II}$ für ein Calcium-Ion.

Einer weiteren Ausführungsform der Erfindung entsprechend werden solche Granate der Formel (I) bevorzugt, in denen $M^{III}$ für ein dreiwertiges Aluminium- und/oder Eisen-Ion, vorzugsweise für ein Aluminium-Ion steht. Besonders gut zugänglich und daher bevorzugt sind Granate der Formel (I), in denen $M^I$ für ein Natrium-Ion, $M^{II}$ für ein Calcium-Ion und $M^{III}$ für ein Aluminium-Ion steht.

Aus der Gruppe dieser Granate ist eine Untergruppe insbesondere geeignet, die durch die Formel (II) wiedergegeben werden kann

$$\left[Na_x\ Ca_{3-\frac{x}{2}}\ Al_2\right](A^n)_m\ (OH)_z \qquad (II)$$

in der $A^n$ für Silicat, Borat, Hydrogenphosphit und/oder Phosphit steht und die Bedingungen gelten $0 \le x < 0{,}7$, $0 < m \le 6$ und $0 \le z < 12$. Bei den Silikaten und Boraten handelt es sich vorzugsweise um die ortho-Verbindungen.

Die Herstellung der Granate der Formel (I) beziehungsweise der Formel (II) ist an sich Stand der Technik, vgl. die eingangs zitierten Literaturstellen E. Passaglia et al. a.a.0. und C.Cohnen-Addad a.a.0. Besonders einfach handhabbar ist die Herstellung im wäßrigen System aus den Hydroxiden bzw. Oxiden der jeweiligen beteiligten Metalle. Am Beispiel der bevorzugten Granate der Formel (II), in der A für ein Silikat steht, wird im folgenden die Herstellung exemplarisch beschrieben. In Anlehnung an die deutsche Patentschrift DE-C-24 24 763 erfolgt die Herstellung aus den Oxiden oder Hydroxiden des Calciums und des Aluminiums durch Fällung im wäßrigen System in Anwesenheit von Silikat-Ionen,

die vorzugsweise in Form von Wasserglas eingebracht werden. Zweckmäßig ist dabei die Anwesenheit von Natrium-Ionen, die bevorzugt in Form ihrer wäßrigen Lösungen von Natriumhydroxid eingebracht werden. Nach einer besonders preisgünstigen Herstellungsvariante wird die Fällung in einer Natriumaluminatlauge, wie sie im Bayer-Prozeß bei der Aufbereitung von Bauxit anfällt mit einer typischen Zusammensetzung von 5 bis 20 Gew.-% Natrium-Ionen, berechnet als $Na_2O$, und 3 bis 20 Gew.-% Aluminium-Ionen, berechnet als $Al_2O_3$, in Anwesenheit der Silikat-Ionen durch Zugabe von Hydroxid oder Oxid des Calciums erzeugt. Anschließend empfiehlt sich eine Erwärmung der Reaktionsmischung auf Temperaturen im Bereich von 50 bis 150°C. In der Regel ist nach 0,1 bis 10 Stunden die Umsetzung beendet, wobei kürzere Reaktionszeiten bei höheren Temperaturen möglich sind. Das entstehende Reaktionsprodukt ist weitgehend wasserunlöslich und kann beispielsweise durch Filtration abgetrennt werden. Um das restliche Wasser zu vertreiben, empfiehlt sich die Trocknung der Granate. Die Einsatzmengen an Calcium- und Aluminium-Ionen liegen im Idealfall etwa im molaren Bereich von 3:2. Silikat-Ionen können in einem weiten Bereich zugegen sein, wie der Index m in der Formel (II) zeigt.

Demnach liegt der molare Anteil an Silikat-Ionen über Null und unter 6, woraus geschlossen werden kann, daß stets noch geringe Mengen an Hydroxylgruppen, die durch den Index z angegeben sind, im Granat vorliegen. Die Menge an Natrium-Ionen wird zum einen durch die vorgelegte Menge an Natrium-Ionen vorgegeben, zum anderen können aber nur begrenzte Mengen an Natrium-Ionen in das Kristallgitter eingebaut werden. Es ist daher zweckmäßig, die Einsatzmengen der Ionen von Natrium, Calcium und Aluminium in molaren Bereichen von 0,1:2,95:2 bis 0,7:2,65:2 zu wählen. Es können zwar auch höhere Mengen von Natrium-Ionen eingesetzt werden, aber diese werden dann nicht mehr entsprechend der eingesetzten Menge in das Kristallgitter eingebaut. Auch wenn höhere Mengen an Hydroxiden oder Oxiden von Calcium oder Aluminium eingesetzt werden, führt dies zu den Granaten der angegebenen Formel, die die nach der Stöchiometrie überschüssigen Hydroxide und Oxide neben den Granaten unverändert mitenthalten. Auch diese Mischungen sind im Sinne der Erfindung als Stabilisator einsetzbar, wobei jedoch der Gehalt an unverändert vorliegenden Hydroxiden und Oxiden unter 50 Gew.%, vorzugsweise unter 30 Gew.%, - bezogen auf Granatmischung - liegen sollte. Es ist natürlich auch möglich, die überschüssigen wasserlöslichen Anteile auszuwaschen.

Da die eingesetzten Oxide oder Hydroxide des Calciums häufig noch als Verunreinigungen die entsprechenden Magnesiumverbindungen vergesellschaftet enthalten, weisen calciumhaltige Granate der Formel (I) oder (II) in der Regel noch einen Teil an Magnesium-Ionen auf. Der Magnesiumanteil in den Granaten entspricht maximal den Mengen vorhandener Verunreinigungen an Magnesium im Calciumoxid oder -hydroxid. Auch derartige Magnesium-Ionen enthaltende Granate der Formel (I) oder (II) sind im Sinne der Erfindung verwendbar. In der Regel beträgt der Anteil an eingebauten Magnesium-Ionen maximal 10 Gew.-% der theoretischen Calciummenge.

Besonders gute stabilisierende Effekte werden erreicht, wenn die Granate mittlere Teilchendurchmesser von 0,1 bis 100 µm, vorzugsweise 0,5 bis 30 µm, bestimmt nach der Laserbeugungsmethode mit dem Gerät Sympathec Helos, aufweisen. Derartige Granate lassen sich besonders leicht und homogen in die Polymerisate einarbeiten. Teilchendurchmesser des angegebenen Bereichs können erzielt werden, wenn die Umsetzung bei den genannten Temperaturen und Reaktionszeiten durchgeführt wird.

Falls gewünscht, können die Granate der Formel (I) oder (II) mit Dispergiermitteln oberflächenmodifziert sein. Vorzugsweise sind die Granate oberflächenmodifiziert mit einen oder mehreren Additiven ausgewählt aus den Gruppen

a) ggf. alkoxylierte Alkohole mit einer oder mehreren Hydroxylgruppen
b) teilweise oder vollständig epoxidierte ungesättigte Fettsäuren, Fettalkohole und/oder deren Derivate
c) Voll- und Partialester von Polyolen mit 3 bis 30 C-Atomen und 2 bis 6 Hydroxylgruppen mit Carbonsäuren mit 6 bis 22 C-Atomen
d) Alkyl- und Arylphosphiten
e) Homo- und Mischpolymere von Acrylsäure und Methacrylsäure
f) Lignin- und Naphthalinsulfonate und/oder Trimerfettsäuren
g) Salze von Fettsäuren.

Als Additive kommen in der Gruppe a) sowohl monofunktionelle Alkohole als auch Polyole mit 3 bis 30 C-Atomen und 2 bis 6 Hydroxylgruppen in Betracht, die gewünschtenfalls alkoxyliert, vorzugsweise ethoxyliert sein können. Aus der Gruppe der monofunktionellen Alkohole werden bevorzugt Fettalkohole mit 6 bis 22 C-Atomen eingesetzt wie Caprin-, Lauryl-, Palmityl-, Stearyl-, Oleyl-, Linoleyl-, Arachidyl- und Behenylalkohol sowie ihre technischen Mischungen wie sie aus natürlichen Ölen und Fetten zugänglich sind. Ganz besonders bevorzugt werden von diesen Fettalkoholen die ethoxylierten Vertreter hiervon eingesetzt mit 2 bis 15 Mol Ethylenoxid. Aus der Gruppe der Polyole eignen sich Diole mit 3 bis 30 C-Atomen, wie Butandiole, Hexandiole, Dodecandiole, sowie Trimethylolpropan, Pentaerythrit, Glycerin und deren technische Oligomerengemische mit durchschnittlichen Kondensationsgraden von 2 bis 10. Ganz besonders bevorzugt werden aus der Gruppe der Polyole solche mit 3 bis 30 C-Atomen, die pro 3 C-Atome mindestens eine Hydroxylgruppe oder einen Ethersauerstoff tragen, vorzugsweise Glycerin und/oder die technischen Oligoglyceringemische mit durchschnittlichen Kondensationsgraden von 2 bis 10.

Bei den Additiven der Gruppe b) handelt es sich um teilweise oder vollständig epoxidierte ungesättigte Fettsäuren oder Fettalkohole mit 6 bis 22 C-Atomen oder Derivate hiervon. Als Derivate der epoxidierten Fettsäuren oder Fettalkoholen sind insbesondere die Ester hiervon geeignet, wobei die epoxidierten Fettsäuren und epoxidierten Fettalkohole miteinander verestert sein können oder aber auch mit nicht-epoxidierten Carbonsäuren oder mit nicht-epoxidierten ein- oder mehrwertigen Alkoholen. Die epoxidierten Fettsäuren leiten sich vorzugsweise von der ungesättigten Palmitolein-, Öl-, Elaidin-, Petroselin-, Ricinol-, Linolen-, Gadolein- oder Erucasäure ab, die nach bekannten Verfahren ganz oder teilweise epoxidiert werden. Die epoxidierten Fettalkohole leiten sich vorzugsweise ab von den ungesättigten Alkoholen Oleyl-, Elaidyl-, Ricinol-, Linoleyl-, Linolenyl-, Gadoleyl-, Arachidon- oder Erucaalkohol ab, die ebenfalls nach bekannten Verfahren ganz oder teilweise epoxidiert werden. Geeignete Ester von epoxidierten Fettsäuren sind Ester von ein-, zwei- und/oder dreiwertigen Alkoholen, die vollständig mit epoxidierten, ungesättigten Carbonsäuren mit 6 bis 22 C-Atomen verestert sind wie Methyl-, 2-Ethylhexyl-, Ethylenglykol-, Butandiol-, Neopentylglykol-, Glycerin- und/oder Trimethylolpropanester von epoxidierter Lauroleinsäure, Palmitoleinsäure, Ölsäure, Ricinolsäure, Linolsäure und/oder Linolensäure. Bevorzugt werden Ester von dreiwertigen Alkoholen und praktisch vollständig epoxidierten ungesättigten Carbonsäuren mit 12 bis 22 C-Atomen, und insbesondere Ester von Glycerin mit praktisch vollständig epoxidierten ungesättigten Carbonsäuren mit 12 bis 22 C-Atomen. Wie in der Fettchemie üblich, können die epoxidierten Carbonsäureglyceride auch technische Gemische darstellen, wie man sie durch Epoxidation von natürlichen ungesättigten Fetten und ungesättigten Ölen erhält. Vorzugsweise werden epoxidiertes Rüböl, epoxidiertes Sojaöl und epoxidiertes Sonnenblumenöl neuer Züchtung eingesetzt.

Bei den Additiven der Gruppe c) handelt es sich um Voll- oder Partialester, die nach den einschlägigen Methoden der präparativen organischen Chemie, beispielsweise durch säurekatalysierte Umsetzung von Polyolen mit Carbonsäuren erhalten werden. Als Polyolkomponente kommen dabei solche in Betracht, die bereits in Zusammenhang mit der Gruppe a) besprochen wurden. Als Säurekomponente werden bevorzugt aliphatische, gesättigte und/oder ungesättigte Carbonsäuren mit 6 bis 22 C-Atomen wie Capronsäure, Caprylsäure, Caprinsäure, Laurinsäure, Myrristinsäure, Palmitinsäure, Palmitoleinsäure, Stearinsäure, Ölsäure, Ricinolsäure, Linolsäure, Linolensäure, Behensäure oder Erucasäure eingesetzt. Wie in der Fettchemie üblich, kann die Carbonsäurekomponente auch ein technisches Gemisch darstellen, wie es bei der Druckspaltung von natürlichen Fetten und Ölen anfällt. Bevorzugt werden Partialester von Glycerin und insbesondere von deren technischen Oligoglyceringemischen mit durchschnittlichen Kondensationsgraden von 2 bis 10 mit gesättigten und/oder ungesättigten aliphatischen Carbonsäuren mit 6 bis 22 C-Atomen.

Schließlich können gemäß Gruppe d) Alkyl- und Arylphosphite eingesetzt werden, vorzugsweise solche der allgemeinen Formel (III)

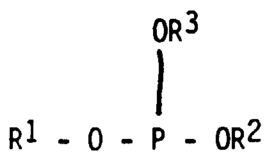

(III)

in der $R^1$, $R^2$ und $R^3$ unabhängig voneinander für einen Alkylrest mit 1 bis 18 Kohlenstoffatomen oder einen Phenylrest stehen. Typische Beispiele für Additive der Gruppe d) sind Tributylphosphit, Triphenylphosphit, Dimethylphenylphosphit und/oder Dimethylstearylphosphit. Bevorzugt wird Diphenyldecylphosphit.

Bei den Additiven aus der Gruppe e) handelt es sich bevorzugt um Polymere von Acrylsäure und Methacrylsäure sowie deren Copolymeren. Der Begriff der Copolymere wird in doppeltem Sinne verstanden: einmal als reine Copolymere von Acrylsäure und Methacrylsäure und zum anderen als Copolymere von (Meth)-Acrylsäure mit weiteren vinylisch ungesättigten, zur Polymerisation fähigen Monomeren. Beispiele für weitere zur Polymerisation fähige Monomere sind sulfon- und phosphonsäuregruppenhaltige ungesättigte Monomere, ungesättigte aliphatische Carbonsäuren mit 3 bis 5 C-Atomen, Amide von ungesättigten aliphatischen Carbonsäuren mit 3 bis 5 C-Atomen, aminogruppenhaltige ungesättigte Monomere und/oder deren Salze, Vinylacetat, Acrolein, Vinylchlorid, Acrylnitril, Vinylidenchlorid, 1,3-Butadien, Styrol, Alkylstyrole mit 1 bis 4 C-Atomen im Alkylrest. Beispiele für Additive der Gruppe e) sind Polyacrylsäure, Polymethacrylsäure - im folgenden werden Acrylsäure und Methacrylsäure sowie deren Derivate vereinfacht als (Meth)-acrylsäure bzw. Derivate abgekürzt -und/oder deren Salze wie Polynatrium-(meth)acrylat, Copolymere von (Meth)acrylsäure mit Maleinsäure, Maleinsäureanhydrid, Styrolsulfonsäure, α-Methylstyrol, 2-Vinylpyridin, 1-Vinylimidazol, Dimethylaminopropyl(meth)acrylamid, 2-(Meth)acrylamido-2-methylpropansulfonsäure, (Meth)acrylamid, N-Hydroxydimethyl(meth)acrylamid und/oder deren Salze. Ganz besonders bevorzugt unter den polymeren Additiven sind solche, die einen überwiegend anionischen Charakter aufweisen, das heißt, die mehrheitlich Säuregruppen

frei oder in Form ihrer Salze tragen. Insbesondere bevorzugt sind Polymere von (Meth)acrylsäure sowie deren Copolymerisate mit Styrol, Acrolein, Alkylstyrolen mit 1 bis 4 C-Atomen im Alkylrest, Styrolsulfonsäure, Maleinsäure und/oder deren Salze, insbesondere deren Natriumsalze und Maleinsäureanhydrid. Zweckmäßigerweise besitzen die polymeren Additiven der Gruppe e) ein Molekulargewicht von 1000 bis 10000. Die Herstellung der polymeren Additive kann nach bekannten Verfahren wie Substanz- oder Lösungsmittelpolymerisation erfolgen (vergleiche Ullmann's Encyclopädie der technischen Chemie, Band 19, 4. Auflage, Seiten 2-11, 1980).

Die Additive der Gruppe f) sind handelsübliche Produkte. Ein Verfahren zur Herstellung von Ligninsulfonaten wird beispielsweise in Ullmann's Encyclopädie der technischen Chemie, Band 16, 4. Auflage, Seiten 254-257, 1978, beschrieben. Auch Trimerfettsäuren sind handelsübliche Produkte, die als Rückstand bei der Dimerfettsäuredestillation anfallen, wie Empol$^R$ 1040 oder Empol 1043 der Fa. Henkel Corporation.

Bei den Additiven der Gruppe g) handelt es sich um Salze von Fettsäuren. Geeignete Fettsäuren wurden bereits im Zusammenhang mit Additiven der Gruppe c) aufgezählt. Bevorzugt werden hier die Alkalisalze der gesättigten Fettsäuren.

Erfindungsgemäß kann ein oder können mehrere Additive aus einer oder mehreren der Gruppen a) bis g) zur Modifizierung der Granate eingesetzt werden, wobei die Gesamtmenge an Additiv in dem Bereich von 0,1 bis 10 Gew.-% - bezogen auf Granat - liegt. Bei Kombinationen der polymeren Additive e) mit weiteren Additiven aus der Gruppe a) bis d) und f) bis g) ist es bevorzugt, die polymeren Additive in Mengen von 50 bis 90 Gew.-% - bezogen auf Gesamtadditivmenge - zu haben. Besonders bevorzugt werden von den oberflächenmodifizierten Granate solche, die mit Additiven aus der Gruppe b), e) und g) alleine oder in Mischung miteinander modifiziert sind.

Die Modifizierung der Granate kann entweder in situ erfolgen oder nachträglich.

Bei der nachträglichen Modifizierung werden die Granate mit organischen oder wäßrigen Lösungen der Additive innigst vermahlen, vorzugsweise mit Mahlkörpermühlen und insbesondere mit einer Kugelmühle und anschließend gewöhnlich getrocknet. Sofern es sich bei den Additiven um bei Raumtemperatur flüssige oder niedrigschmelzende Produkte handelt, muß man natürlich keine Lösungen davon verwenden. Ansonsten verwendet man bei den Additiven a) bis g) am liebsten klare wäßrige Lösungen oder Lösungen mit polaren organischen Lösemitteln.

Der Begriff der polaren organischen Lösemittel umfaßt bei Raumtemperatur (15 bis 25 °C) flüssige Kohlenwasserstoffverbindungen, die mindestens einen elektronegativeren Substituenten als Kohlenstoff tragen. Dazu zählen Chlorkohlenwasserstoffe, Alkohole, Ketone, Ester, Ether und/oder Glykolether. Geeignete polare organische Lösemittel sind Methanol, Ethanol, n-Butanol, Aceton, Methylethylketon, Methylisobutylketon, Cyclohexanol, Isophoron, Ethylacetat, Milchsäureethylester, 2-Methoxyethylacetat, Tetrahydrofuran, Ethylglykolmonomethylether, Diethylenglykolmonoethylether.

Damit die Oberfläche der Granate gleichmäßig modifiziert werden kann, ist es bei Anwesenheit der Additive der Gruppe e) zweckmäßig, wenn diese löslich sind in polaren organischen Lösungsmitteln der beschriebenen Art und/oder in Wasser mit pH-Werten von 8 bis 12. Der Begriff löslich bedeutet in diesem Zusammenhang, daß die polymeren Additive e) in den polaren organischen Lösungsmitteln und in einer wäßrigen Lösung mit pH 10, eingestellt mit Alkalihydroxiden bei 20 °C, zu mindestens 0,01 Gew.-%, vorzugsweise 0,1 Gew.-%, - bezogen auf Lösung - und insbesondere unter den angegebenen Bedingungen vollständig klar gelöst sind.

Die Modifizierung kann auch in situ erfolgen, das heißt, man kann bereits den Metalloxid- bzw. -hydroxid-Lösungen, aus dem sich Granate der Formel (I) bzw. (II) bilden, die Additive ggf. in Form ihrer Lösungen zusetzen.

Letztendlich kann man aber auch beide Modfizierungsarten kombinieren, was sich für die Modifizierung mit mehreren Additiven empfiehlt, die insbesondere unterschiedliches Löseverhalten zeigen.

Die Oberflächenmodifizierung der Granate kann insbesondere deren Dispergierverhalten in den Polymerisaten verbessern.

Die gegebenenfalls oberflächenmodifizierten Granate können alleine als anorganischer Bestandteil in den Stabilisatormischungen enthalten sein oder aber auch in Mischung mit

i) synthetischen, kristallinen, 13 bis 25 Gew.-% gebundenes Wasser enthaltende feinteilige Natriumalumosilikate der Zusammensetzung 0,7 bis 1,1 $Na_2O{\cdot}Al_2O_3{\cdot}$1,3 bis 2,4 $SiO_2$ - bezogen auf wasserfreie Form und/oder
ii) Hydrotalciten und/oder
iii) Hydrocalumiten und/oder
iiii) geglühten Granaten.

Bei den synthetischen Natriumalumosilikaten i) handelt es sich um bekannte Zeolithe vom Typ NaA, die einen durchschnittlichen Porenmesser von 4 Å besitzen, weshalb sie auch als Zeolithe 4A bezeichnet werden. Derartige Natriumalumosilikate können nach bekannten Methoden hergestellt werden, wie sie unter anderem in der deutschen Offenlegungsschrift DE-A-24 12 837 beschrieben sind. Die Mischungen von Granaten und Zeolithen können entweder durch nachträgliches Mischen der beiden Verbindungsklassen hergestellt werden oder aber auch in situ.

So fallen Mischungen von Granaten der Formel (I) bzw. (II) und Zeolithen dann an, wenn Granate der Formel (I)

bzw. (II) hergestellt werden, in der A für ein Silikat steht, und wenn in den Reaktionsmischungen zur Herstellung dieser Granate in Gegenwart von Natrium-Ionen gearbeitet wird, die mindestens in Mengen von 10 Gew.-% - bezogen auf Gesamtreaktionsansatz, zugegen sind. Des weiteren wird die Bildung solcher Mischungen von Granaten der Formel (I) oder (II), in der A für ein Silikat steht, und Zeolithen begünstigt, wenn Reaktionstemperaturen über 70 °C gewählt werden. Unter diesen Umständen ist es möglich, Mischungen zu erhalten, die bis zu 10 Gew.-% an Zeolithen der beschriebenen Art erhalten. Möchte man höhere Anteile an Zeolithe in der Mischung, oder möchte man keine Silikate enthaltende Granate in Mischung mit Zeolithen einsetzen, empfiehlt sich die getrennte Herstellung der Bestandteile und anschließendes Vermischen.

Ein weiterer anorganischer Bestandteil können Hydrotalcite sein, wie sie aus der eingangs zitierten europäischen Patentschrift DE-C-30 19 632 bekannt sind. Im Sinne der Erfindung müssen die Hydrotalcite aber keine Oberfläche nach BET von unter 30 $m^2/g$ aufweisen, sondern können ebenso größere Oberflächen besitzen, sofern sie mit einem dispergierend wirkenden Additiv modifiziert sind. Zur Modfizierung können die unter a) bis g) genannten Additive verwendet werden. Die Modifizierung und geeignete modifizierte Hydrotalcite werden auch in der internationalen Anmeldung W092/06135 und in den deutschen Offenlegungsschriften DE-A-41 17 035 und DE-A-41 14 034 beschrieben.

Die Hydrocalumite sind ebenfalls bekannte Verbindungen, beispielsweise aus der schon zitierten deutschen Patentschrift DE-C-39 41 902.

Bei den geglühten Granaten handelt es sich um Granate der allgemeinen Formel (I) bzw. (II), die bei Temperaturen über 400 °C, vorzugsweise zwischen 600 und 1200 °C mindestens 1 Stunde, vorzugsweise 3 bis 6 Stunden in üblichen Öfen geglüht worden sind. Die genaue Zusammensetzung dieser geglühten Granate ist nicht bekannt, aber vermutlich wird es sich zumindest teilweise um Oxidgemische handeln.

Die Verbindungen i) bis iiii) können alleine oder aber als Gemisch, jeweils zusammen mit den Granaten der Formel (I) bzw. (II) vorliegen. Der Gehalt an den Verbindungen i) bis iiii) ist nicht kritisch, liegt aber vorzugsweise im Bereich von 0 bis 50 Gew.-% - bezogen auf Mischung mit Granaten. Besonders bevorzugt werden Mischungen mit Granaten der Formel (I) oder (II), in der A für ein Silikat steht und m eine Zahl über 0 und unter 1 bedeutet, und Zeolithen i).

Die erfindungsgemäßen Stabilisatormischungen enthalten außerdem Zink- und Calciumseifen von $C_{8-32}$-Fettsäuren, vorzugsweise von gesättigten, aliphatischen Fettsäuren. Von den Zinkseifen werden bevorzugt solche von $C_8$-$C_{22}$-Fettsäuren eingesetzt und insbesondere von technischer Stearinsäure, die stets auch erhebliche Mengen an Palmitinsäure enthält. Diese Zinkseifen können in an sich bekannter Weise durch Fällung von Zinksalzen mit Monocarbonsäuren oder direkt aus Zinkoxid und Monocarbonsäure hergestellt werden.

Bei den Calciumseifen handelt es sich ebenso wie bei den Zinkseifen vorzugsweise um solche von aliphatischen gesättigten Fettsäuren, bevorzugt von Fettsäuren mit 12 bis 22 C-Atomen und insbesondere um technisches Calciumstearat, das Calciumpalmitat enthält.

Besonders bevorzugt werden Stabilisatormischungen, die

| | |
|---|---|
| 0,5 bis 3 | Gewichtsteile Calciumseifen von $C_{8-32}$ Fettsäuren, vorzugsweise technisches Calciumstearat, |
| 0,1 bis 1 | Gewichtsteile Zinkseifen von $C_{8-32}$ Fettsäuren, vorzugsweise technisches Zinstearat und |
| 1 bis 5 | Gewichtsteile Granate, gegebenenfalls oberflächenmodifizierte, der Formel (I), vorzugsweise der Formel (II), enthalten. |

Um die Anfangsfarbe der chlorhaltigen Polymerisate noch weiter zu verbessern, können die Stabilisatormischungen zusätzlich Calcium-Komplexe von 1,3-Diketonen enthalten.

Die Calcium-Komplexe von 1,3-Diketonen, die im Sinne der Erfindung mitverwendet werden können, werden durch die Formel (IV) wiedergegeben

$$[R^1CO\text{-}CH{=}C(R^2)\text{-}O]_a\ Ca(OH)_b \qquad (IV)$$

| | |
|---|---|
| in der $R^1$ und $R^2$ | gleiche oder verschiedene Alkylreste mit 1 bis 4 C-Atomen, Phenyl- oder p-Chlorphenylreste, |
| a | einen Wert von 1 bis 2, |
| b | einen Wert von 0 bis 1, unter der Bedingung, daß a+b=2, |

bedeutet.

Die Calcium-Komplexe von 1,3-Diketonen stellen neutrale (a = 2, b = 0) oder basische (a = 1, b = 1) Verbindungen dar. Die Gruppen $R^1$ und $R^2$ können einen Methyl-, Ethyl-, Propyl-, Butyl-, Phenyl- oder p-Chlorphenylrest bedeuten. Bevorzugt wird ein Calcium-Komplex der Formel (IV), in der die Gruppen $R^1$ und $R^2$ gleich sind und einen Methylrest bedeuten, b = 0 und a = 2 ist, das heißt Calciumacetylacetonat, welches aus einem Mol Calciumhydroxid und 2 Mol Acetylaceton erhältlich ist. In der deutschen Offenlegungsschrift DE-A- 38 11 493 werden derartige Ca-Komplexe bereits beschrieben.

Weitere zusätzliche Bestandteile der erfindungsgemäßen Stabilisatormischung können sein Co-Stabilisatoren wie β-Diketone, Polyole und (polymere) Dihydropyridinderivate. Geeigente β-Diketone sind Benzoylaceton, Stearoylbenzoylmethan, Palmitoylbenzoylmethan, 4-Methoxybenzoylbenzoylmethan, Stearoylaceton und geeignete Polyole sind Polyole mit 2 bis 32 C-Atomen und 2 bis 6 primären Hydroxylgruppen wie Propylenglykol, Neopentylglykol, Trimethylolpropan, Pentaerythrit, Glycerin sowie technische Oligomerengemische des Glycerins und/oder hydroxylgruppenhaltige Isocyanurate wie Tris(2-hydroxylethyl)isocyanurat. Dihydropyridinderivate bzw. auch polymere Dihydropyridinderivate sind im Handel käufliche Produkte.

Zudem können Antioxidantien mitverwendet werden wie Ester der phosphorigen Säure mit Alkanolen, Phenolen oder Polyolen und Gleitmittel wie Partialester von Polyolen mit 2 bis 32 C-Atomen und 2 bis 6 Hydroxylgruppen und Monocarbonsäuren mit 6 bis 22 C-Atomen oder Fettsäureester. Desweiteren können Weichmacher, wie epoxidierte Pflanzenöle oder Phthalate, Schlagzähigkeitsverbesser wie Copolymere auf Basis (Meth) Acrylsäureester-Co-Butadien-Co-Styrol, Flow-improver, wie Methacrylsäureestercopolymere, Pigmente, Füllstoffe, Flammschutzmittel oder auch UV-Stabilisatoren wie sterisch gehinderte Amin-Lichtstabilisatoren (HALS) mitverwendet werden.

Ein weiterer Gegenstand der vorliegenden Erfindung ist die Verwendung von Mischungen enthaltend

a) Calciumseifen von $C_{8-32}$ Fettsäuren
b) Zinkseifen von $C_{8-32}$ Fettsäuren
c) gegebenenfalls oberflächenmodifizierte Granate der Formel (I) nach Anspruch 1, vorzugsweise der Formel (II) nach Anspruch 7,

als Stabilisator für Polymerisate auf Basis von halogenhaltigen Vinylmonomeren, insbesondere für PVC.

**Beispiele**

**A) Herstellung der Granate**

Beispiel 1

Zu 433,7 g Natriumaluminatlauge (enthaltend 14,6 Gew.-% $Na_2O$ (entsprechend 2,04 mol Na), 11,35 Gew.-% $Al_2O_3$ (entsprechend 1 mol Al) als Hydroxokomplex, wurden bei 90 °C 111,7 g Wasserglas-Lösung (Zusammensetzung: 8 Gew.-% $Na_2O$, entsprechend 0,288 mol Na; 26,9 Gew.-% $SiO_2$, entsprechend 0,5 mol Si, Rest Wasser) und dann 111,1 g Calciumhydroxid (entsprechend 1,5 mol Ca), suspendiert in 134,5 g voll entionisiertem Wasser, unter intensivem Rühren zugegeben. Nach 3 Stunden wurde der entstehende Feststoff abfiltriert, mit Wasser nachgewaschen und bei 110 °C getrocknet.

Nach Röntgenbeugungsanalyse (RBA) enthält der Feststoff über 90 Gew.-% $Na_{0,4}Ca_{2,8}Al_2SiO_4(OH)_8$.

Die mittlere Teilchengröße nach der Laserbeugungsmethode bestimmt mit dem Sympathec Helos beträgt 22,1 µm.

Beispiel 2

Analog Beispiel 1 wurden zu 433,7 g der in Beispiel 1 beschriebenen Natriumaluminatlauge bei 90 °C zunächst 223 g Wasserglaslösung nach Beispiel 1 (entsprechend 1 mol Si, 0,576 mol Na) und dann 111,1 g Calciumhydroxid (entsprechend 1,5 mol Ca), suspendiert in 1231,8 g vollentionisiertem Wasser, zugegeben. Nach 3 Stunden wurde ein Feststoff abfiltriert, gewaschen und getrocknet.

Nach RBA enthält der Feststoff über 90 Gew.-% $Na_{0,5}$ $Ca_{2,75}Al_2(SiO_4)_2(OH)_4$ und Rest ist $Ca(OH)_2$.
Die mittlere Teilchengröße beträgt 10,9 µm.

Beispiel 3

Die Umsetzung wurde analog Beispiel 1 durchgeführt; jedoch wurden zusätzlich 252 g Dinatriumhydrogenphosphit (entsprechend 2 mol) zur Natriumaluminatlauge vor Reaktionsbeginn gegeben und die Reaktion 5 Stunden bei 90 °C durchgeführt.

Der Feststoff enthält nach RBA > 95 $Na_{0,4}Ca_{2,8}Al_{2,1}(SiO_4)(HPO_3)_{0,11}(OH)_{8,08}$; der Rest ist Zeolith NaA. Die energiedispersive Röntgenmikroanalyse (EDX) belegt den Einbau von Silicium, Phosphor, Calcium, Auliminium, Sauerstoff und Natrium in diesen Mengen.
Die mittlere Teilchengröße beträgt 2,1 µm.

Beispiel 4

Die Umsetzung wurde analog Beispiel 1 durchgeführt; jedoch wurden zusätzlich 63 g Dinatriumhydrogenphosphit (entsprechend 0,5 mol) 5 Minuten vor Reaktionsende (Reaktionsdauer 5 Stunden) zugegeben.

Man erhält einen Feststoff, an dem oberflächlich Hydrogenphosphit anhaftet und der nach RBA die analoge Zusammensetzung wie in Beispiel 1 hat. Die mittlere Teilchengröße beträgt 8,7 µm.

Beispiel 5

Die Reaktion wurde analog Beispiel 1 durchgeführt; jedoch wurden 5 Minuten vor Reaktionsende (Reaktionsdauer 5 Stunden) zusätzlich 252 g Dinatriumhydrogenphosphit (entsprechend 2 mol) zugegeben.

Man erhält einen Feststoff, an dem zusätzlich oberflächlich Hydrogenphosphit anhaftet der nach RBA die analoge Zusammensetzung wie in Beispiel 1 hat.

Die mittlere Teilchengröße beträgt 8,7 µm.

Beispiel 6

Die Reaktion wurde analog Beispiel 1 durchgeführt; jedoch wurde anstelle von Wasserglas 142,13 g Titantetraisopropylat (entsprechend 0,5 mol Ti) zugegeben.

Der Feststoff enthält nach RBA fast ausschließlich $Na_{0,4}Ca_{2,8}Al_{0,82}Ti_{0,9}(OH)_{10,26}(O)_{0,9}$. Die Mengenverhältnisse wurden mit EDX ermittelt.

Die mittlere Teilchengröße beträgt 3,5 µm.

Beispiel 7

Die Reaktion wurde analog Beispiel 1 durchgeführt; jedoch wurde anstelle von Wasserglas 164,29 g Zirkoniumtetraisopropylat (entsprechend 0,5 mol Zr) zugegeben.

Der Feststoff enthält nach RBA fast ausschließlich $Na_{0,3}Ca_{2,85}Al_{1,2}Zr_{0,6}(OH)_{10,8}(O)_{0,6}$. Die Mengenverhältnisse wurden mit EDX ermittelt.

Die mittlere Teilchengröße beträgt 5 µm.

Beispiel 8

Die Reaktion wurde analog Beispiel 1 durchgeführt; jedoch wurde die Menge an Wasserglaslösung reduziert auf 55,85 g (entsprechend 0,25-mol Si).

Der Feststoff enthält nach RBA >95 Gew.-% $Na_{0,4}Ca_{2,8}Al_2(SiO_4)_{0,5}(OH)_{10}$, Rest ist $Ca(OH)_2$.

Die mittlere Teilchengröße beträgt 1,9 µm.

Beispiel 9

Die Reaktion wurde analog Beispiel 1 durchgeführt; jedoch wurde anstelle von Wasserglas 381,39 g Borax (entsprechend 4 mol $BO_3$) eingesetzt.

Nach RBA enthält der Feststoff etwa 85 Gew.-% $Na_{0,6}Ca_3Al_{2,3}(BO_3)_{1,25}(OH)_{9,75}$ und Rest $Ca(OH)_2$.

Die mittlere Teilchengröße beträgt 4,5 µm.

Beispiel 10

Die Reaktion wurde analog Beispiel 9 durchgeführt. Nach 3 Stunden wurde zu der Reaktionsmischung 3,78 g Natriumstearat zugegeben und weitere 10 Minuten bei 90 °C gerührt. Der Feststoff wurde abfiltriert, gewaschen und getrocknet.

Bei dem Feststoff handelt es sich um ein mit Natriumstearat oberflächenmodifiziertes Produkt mit einer Zusammensetzung nach RBA gemäß Beispiel 9. Die mittlere Teilchengröße beträgt 8,0 µm.

Beispiel 11

Die Umsetzung erfolgte analog Beispiel 1, jedoch wurde zusätzlich vor Reaktionsbeginn 2 Gew.-% - bezogen auf $Ca_3Al_2SiO_4(OH)_8$ - Natriumstearat zugegeben.

Man erhält einen mit Natriumstearat oberflächenmodifizierten Feststoff mit einer Zusammensetzung nach RBA gemäß

Beispiel 1. Die mittlere Teilchengröße beträgt 20 µm.

Beispiel 12

Die Umsetzung erfolgte analog Beispiel 1, jedoch wurde zusätzlich vor Reaktionsbeginn 3 Gew.-% eines Copolymerisats aus 46 Gew.-% Styrol, 23 Gew.-% α-Methylstyrol und 31 Gew.-% Acrylsäure; Molekulargewicht (Gewichtsmittel) 6000 (Copolymerisat 1) gegeben.
Man erhält einen mit dem Copolymerisat oberflächenmodifizierten Feststoff mit einer Zusammensetzung nach RBA gemäß Beispiel 1.
Die mittlere Teilchengröße beträgt 14,2 µm.

Beispiel 13

Die Umsetzung erfolgte analog Beispiel 1, jedoch wurde zusätzlich vor Reaktionsbeginn 3 Gew.-% Copolymerisat 1 und 2 Gew.-% Natriumstearat - bezogen auf $Ca_3Al_2SiO_4(OH)_8$ - zugegeben.
Man erhält ein mit Copolymerisat und Natriumstearat oberflächenmodifiertes Produkt mit der Zusammensetzung nach RBA gemäß Beispiel 1. Die mittlere Teilchengröße beträgt 14,6 µm.

**B) Anwendungstest**

Untersucht wurde die "statische" Stabilität von Walzfellen, die auf 100 Gewichtsteile (Gew.-Teile) Suspensions-Polyvinylchlorid mit einem K-Wert von 65 eine Stabilisatormischung enthielten von (in Gew.-Teile)

0,25 Calciumacetylacetonat
0,7 technisches Zinkstearat
0,35 technisches Calciumstearat
0,2 Tris(2-hydroxyethyl)isocyanurat
0,05 Stearoylbenzoylmethan
2,5 Granate nach den Beispielen.

Zusätzlich waren als Schlagzähigkeitsverbesser 8 Gew.-Teile Polyacrylat und als Füllstoffe 4 Gew.-Teile Kreide und 1,0 Gew.-Teile Titandioxid enthalten.

Die Stabilität der Polyvinylchloridformmasse wurde anhand der statischen Thermostabilität von Walzfellen geprüft. Zu diesem Zweck wurde Stabilisatorgemisch enthaltendende Polyvinylchloridformmasse auf einem Laborwalzwerk der Abmessung 450 x 220 mm (Firma Berstorff) bei einer Walzentemperatur von 170 °C und einer Walzendrehzahl von 12,5 Upm im Gleichlauf im Verlauf von 5 Minuten zu einem Prüffell verarbeitet. Das ca. 0,5 mm dicke Fell wurde zu quadratischen Probestücken mit 10 mm Kantenlänge zerschnitten, die anschließend in einem Trockenschrank mit 6 rotierenden Horden (Heraus FT 420 R) einer Temperatur von 180 °C ausgesetzt wurden. Im Abstand von 15 Minuten wurden Proben entnommen und deren Farbveränderung begutachtet.

In Tabelle I ist aufgeführt, nach wieviel Minuten die erste Verfärbung auftrat und nach wieviel Minuten Stabilitätsabbruch durch Dunkelbraunfärbung der Walzfellprobestücke zu beobachten war.

Tabelle I

| **Stabilität** | | |
|---|---|---|
| Katoit nach Beisp. | erste Verfärbung (in Min.) | Stabilitätsabbruch (Min) |
| Grundansatz* | 15 | 45 |
| 1 | 45 | 90 |
| 2 | 30 | 90 |
| 3 | 45 | 75 |
| 4 | 45 | 105 |
| 5 | 45 | 105 |
| 6 | 45 | 90 |
| 7 | 45 | 90 |
| 8 | 45 | 105 |

* Im Grundsatz wurde die stabilisierte PVC-Mischung wie unter B) aufgeführt eingesetzt, jedoch ohne 2,5 Teile Granat.

Tabelle I (fortgesetzt)

| Stabilität | | |
|---|---|---|
| Katoit nach Beisp. | erste Verfärbung (in Min.) | Stabilitätsabbruch (Min) |
| 9 | 45 | 75 |
| 10 | 45 | 75 |
| 11 | 45 | 90 |
| 12 | 45 | 90 |
| 13 | 45 | 90 |

**Patentansprüche**

**1.** Stabilisatormischungen für Polymerisate auf Basis von halogenhaltigen Vinylmonomeren enthaltend

a) Calciumseifen von $C_{8-32}$ Fettsäuren
b) Zinkseifen von $C_{8-32}$ Fettsäuren
c) Granate, gegebenenfalls oberflächenmodifiziert, der Formel (I)

$$\left[M^{I}_{x}\ M^{II}_{3-\frac{x}{2}}\ M^{III}_{2-y}\ M^{IV}_{y}\right] (OH)_{z-y} O_y (A^n)_m \qquad (I)$$

in der

$M^I$ für mindestens ein Alkalimetall-Ion
$M^{II}$ für mindestens ein zweiwertiges Metall-Ion
$M^{III}$ für mindestens ein dreiwertiges Metall-Ion
$M^{IV}$ für Titan und/oder Zirkonium-Ionen
$A^n$ für mindestens ein n-wertiges Säureanion der Ladung n=1, 2, 3 oder 4 stehen und

die Bedingungen gelten
$0 \leq x < 1$, $0 \leq y < 1$, $0 \leq z < 12$, $0 < m$, wobei $y < z$ und $n \cdot m + z = 12$.

**2.** Stabilisatormischungen nach Anspruch 1, dadurch gekennzeichnet, daß in der Formel (I) $M^I$ für ein Natrium-Ion steht.

**3.** Stabilisatormischungen nach Anspruch 1, dadurch gekennzeichnet, daß in der Formel (I) $M^{II}$ für Metall-Ionen ausgewählt aus der Gruppe Calcium, Magnesium, Eisen, Zink und Mangan steht.

**4.** Stabilisatormischungen nach Anspruch 1, dadurch gekennzeichnet, daß $M^{III}$ für Aluminium- und/oder dreiwertige Eisen-Ionen steht.

**5.** Stabilisatormischungen nach einem der Ansprüche 1 bis 3, dadurch gekennzeichnet, daß $M^I$ für ein Natrium-Ion, $M^{II}$ für ein Calcium-Ion und $M^{III}$ für ein Aluminium-Ion steht.

**6.** Stabilisatormischungen nach Anspruch 1, dadurch gekennzeichnet, daß A für Säureanionen aus der Anionengruppe Carbonat, Sulfat, Sulfit, Formiat, Nitrat, Nitrit, Phosphit, Hydrogenphosphit, Fluorid, Chlorid, Borat, Silicat, Stannat, Chlorat, Perchlorat steht.

**7.** Stabilisatormischungen nach einem der Ansprüche 1 bis 5, dadurch gekennzeichnet, daß Granate der Formel (II)

$$\left[Na_x\ Ca_{3-\frac{x}{2}}\ Al_2\right](A^n)_m\ (OH)_z \qquad (II)$$

in der $A^n$ für Orthosilicat, Borat, Hydrogenphosphit und/oder Phosphit steht und die Bedingungen gelten $0 \leq x < 0{,}7$, $0 < m \leq 6$ und $0 \leq z < 12$, enthalten sind.

**8.** Stabilisatormischungen nach Anspruch 1, dadurch gekennzeichnet, daß die Granate oberflächenmodifiziert sind mit einem oder mehreren Additiven ausgewählt aus den Gruppen

a) ggf. alkoxylierte Alkohole mit einer oder mehreren Hydroxylgruppen
b) teilweise oder vollständig epoxidierte ungesättigte Fettsäuren, Fettalkohole und/oder deren Derivate
c) Voll- und Partialester von Polyolen mit 3 bis 30 C-Atomen und 2 bis 6 Hydroxylgruppen mit Carbonsäuren mit 6 bis 22 C-Atomen
d) Alkyl- und Arylphosphiten
e) Homo- und Mischpolymere von Acrylsäure und Methacrylsäure
f) Lignin- und Naphthalinsulfonate und/oder Trimerfettsäuren
g) Salze von Fettsäuren.

**9.** Stabilisatormischungen nach mindestens einem der Ansprüche 1 bis 8, dadurch gekennzeichnet, daß sie

0,5 bis 3 Gewichtsteile Calciumseifen von $C_{8\text{-}32}$ Fettsäuren,
0,1 bis 1 Gewichtsteile Zinkseifen von $C_{8\text{-}32}$ Fettsäuren,
1 bis 5 Gewichtsteile Granate der Formel (I), gegebenenfalls oberflächenmodifiziert,

enthalten.

**10.** Verwendung von Mischungen enthaltend

a) Calciumseifen von $C_{8\text{-}32}$ Fettsäuren
b) Zinkseifen von $C_{8\text{-}32}$ Fettsäuren
c) Granate der Formel (I) nach Anspruch 1, gegebenenfalls oberflächenmodifiziert,

als Stabilisator für Polymerisate auf Basis von halogenhaltigen Vinylmonomeren.

## Claims

**1.** Stabilizer mixtures for polymers based on halogen-containing vinyl monomers containing

a) calcium soaps of $C_{8\text{-}32}$ fatty acids
b) zinc soaps of $C_{8\text{-}32}$ fatty acids
c) optionally surface-modified garnets corresponding to formula (I):

$$\left[M^{I}_{x}\ M^{II}_{3-\frac{x}{2}}\ M^{III}_{2-y}\ M^{IV}_{y}\right](OH)_{z-y}O_y\ (A^n)_m \qquad (I)$$

in which

$M^I$ is at least one alkali metal ion
$M^{II}$ is at least one divalent metal ion

$M^{III}$ is at least one trivalent metal ion
$M^{IV}$ represents titanium and/or zirconium ions
$A^n$ is at least one n-valent acid anion with the charge n=1, 2, 3 or 4 and

the following conditions apply:
$0 \leq x < 1$, $0 \leq y < 1$, $0 \leq z < 12$, $0 < m$, where $y < z$ and $n \cdot m + z = 12$.

**2.** Stabilizer mixtures as claimed in claim 1, characterized in that $M^I$ in formula (I) is a sodium ion.

**3.** Stabilizer mixtures as claimed in claim 1, characterized in that $M^{II}$ in formula (II) represents metal ions selected from the group consisting of calcium, magnesium, iron, zinc and manganese.

**4.** Stabilizer mixtures as claimed in claim 1, characterized in that $M^{III}$ stands for aluminium and/or trivalent iron ions.

**5.** Stabilizer mixtures as claimed in any of claims 1 to 3, characterized in that $M^I$ is a sodium ion, $M^{II}$ is a calcium ion and $M^{III}$ is an aluminium ion.

**6.** Stabilizer mixtures as claimed in claim 1, characterized in that A is an acid anion from the group consisting of carbonate, sulfate, sulfite, formate, nitrate, nitrite, phosphite, hydrogen phosphite, fluoride, chloride, borate, silicate, stannate, chlorate, perchlorate.

**7.** Stabilizer mixtures as claimed in any of claims 1 to 5, characterized in that they contain garnets corresponding to formula (II) :

$$\left[ Na_x \, Ca_{3-\frac{x}{2}} \, Al_2 \right] (A^n)_m \, (OH)_z \qquad (II)$$

in which $A^n$ stands for orthosilicate, borate, hydrogen phosphite and/or phosphite and the conditions $0 \leq x < 0.7$, $0 < m \leq 6$ and $0 \leq z < 12$ apply.

**8.** Stabilizer mixtures as claimed in claim 1, characterized in that the garnets are surface-modified with one or more additives selected from the following groups:

a) optionally alkoxylated alcohols containing one or more hydroxyl groups
b) partly or completely epoxidized unsaturated fatty acids, fatty alcohols and/or derivatives thereof
c) full and partial esters of polyols containing 3 to 30 carbon atoms and 2 to 6 hydroxyl groups with carboxylic acids containing 6 to 22 carbon atoms
d) alkyl and aryl phosphites
e) homopolymers and copolymers of acrylic acid and methacrylic acid
f) lignin and naphthalene sulfonates and/or trimer fatty acids
g) salts of fatty acids.

**9.** Stabilizer mixtures as claimed in at least one of claims 1 to 8, characterized in that they contain

0.5 to 3 parts by weight of calcium soaps of $C_{8-32}$ fatty acids,
0.1 to 1 part by weight of zinc soaps of $C_{8-32}$ fatty acids,
1 to 5 parts by weight of garnets, optionally surface-modified garnets corresponding to formula (I).

**10.** The use of mixtures containing

a) calcium soaps of $C_{8-32}$ fatty acids
b) zinc soaps of $C_{8-32}$ fatty acids
c) optionally surface-modified garnets corresponding to formula (I) in claim 1

as stabilizers for polymers based on halogen-containing vinyl monomers.

**Revendications**

**1.** Mélanges de stabilisants pour des polymères à base de monomères de vinyle contenant de l'halogène comprenant :

a) des savons de calcium d'acides gras en $C_{8\text{-}32}$,
b) des savons de zinc d'acides gras en $C_{8\text{-}32}$,
c) des grenats, le cas échéant modifiés en surface, de formule (I)

$$\left[ M^{I}_{x} \quad M^{II}_{3-\frac{x}{2}} \; M^{III}_{2-y} \; M^{IV}_{y} \right] (OH)_{z-y} O_{y} \; (A^{n})_{m} \qquad (I)$$

où

$M^{I}$ représente au moins un ion de métal alcalin,
$M^{II}$ représente au moins un ion de métal bivalent,
$M^{III}$ représente au moins un ion de métal trivalent,
$M^{IV}$ représente des ions de titane et/ou de zirconium,
$A^{n}$ représente au moins un anion d'acide n-valent de charge n = 1,2,3 ou 4 et,

on a les conditions suivantes :
$0 \leq x < 1$, $0 \leq y < 1$, $0 \leq z < 12$, $0 < m$, tandis que $y < z$ et $n \cdot m + z = 12$.

**2.** Mélanges de stabilisants selon la revendication 1,
caractérisés en ce que
dans la formule (I) $M^{I}$ est un ion sodium.

**3.** Mélanges de stabilisants selon la revendication 1,
caractérisés en ce que
dans la formule (I) $M^{II}$ représente des ions de métal choisis dans le groupe du calcium, magnésium, fer, zinc et manganèse.

**4.** Mélanges de stabilisants selon la revendication 1,
caractérisés en ce que
$M^{III}$ représente des ions aluminium et/ou des ions fer trivalents.

**5.** Mélanges de stabilisants selon l'une des revendications 1 à 3,
caractérisés en ce que
$M^{I}$ représente un ion sodium, $M^{II}$ un ion calcium et $M^{III}$ un ion aluminium.

**6.** Mélanges de stabilisants selon la revendication 1,
caractérisés en ce que
A représente des anions d'acide du groupe des anions carbonate, sulfate, sulfite, formiate, nitrate, nitrite, phosphite, hydrogénophosphite, fluorure, chlorure, borate, silicate, stannate, chlorate, perchlorate.

**7.** Mélanges de stabilisants selon l'une des revendications 1 à 5,
caractérisés en ce qu'
ils contiennent des grenats de formule (II),

$$\left[Na_x\ Ca_{3-\frac{x}{2}}\ Al_2\right]\ (A^n)_m\ (OH)_z \qquad (II)$$

où $A^n$ représente un orthosilicate, borate, hydrogénophosphite et/ou phosphite et où on a les conditions suivantes $0 \leq x < 0,7$, $0 \leq m \leq 6$ et $0 \leq z < 12$.

**8.** Mélanges de stabilisants selon la revendication 1,
caractérisés en ce que
les grenats sont modifiés en surface avec un ou plusieurs additifs choisis dans les groupes des :

a) des alcools alcoxylés le cas échéant avec un ou plusieurs groupes hydroxyle,
b) des acides gras insaturés, alcools gras et/ou leurs dérivés partiellement ou totalement époxydés,
c) des esters partiels ou complets de polyols de 3 à 30 atomes de C et 2 à 6 groupes hydroxyle et d'acides carboxyliques de 6 à 22 atomes de C,
d) des phosphites d'alkyle et aryle,,
e) des homopolymères et copolymères d'acide acrylique et d'acide méthacryliques,
f) des sulfonates de lignine et de naphtaline et/ou des acides gras trimères,
g) des sels d'acides gras.

**9.** Mélanges stabilisants selon au moins l'une des revendications 1 à 8,
caractérisés en ce qu'ils contiennent :

0,5 à 3 parties en poids de savons de calcium d'acides gras en $C_{8-32}$.
0,1 à 1 partie en poids de savons de zinc d'acides gras en $C_{8-32}$,
1 à 5 parties en poids de grenats de formule (I), modifiés en surface le cas échéant.

**10.** Utilisation de mélanges contenant :

a) des savons de calcium d'acides gras en $C_{8-32}$,
b) des savons de zinc d'acides gras en $C_{8-32}$,
c) des grenats de formule (I) selon la revendication 1, modifiés en surface le cas échéant, comme stabilisant de polymères à base de monomères de vinyle contenant de l'halogène.